(19) Europäisches Patentamt
European Patent Office
Office européen des brevets

(11) **EP 2 840 464 A1**

(12) **EUROPEAN PATENT APPLICATION**

(43) Date of publication:
**25.02.2015 Bulletin 2015/09**

(51) Int Cl.:
***G06F 3/01*** *(2006.01)*          ***G06F 11/34*** *(2006.01)*

(21) Application number: **14178341.5**

(22) Date of filing: **24.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.08.2013 KR 20130099282**

(71) Applicant: **Samsung Electronics Co., Ltd Gyeonggi-do 443-742 (KR)**

(72) Inventor: **Lee, Ho-Sub Seoul (KR)**

(74) Representative: **Grünecker, Kinkeldey, Stockmair & Schwanhäusser Leopoldstrasse 4 80802 München (DE)**

(54) **Apparatus and method for enhancing system usability**

(57)     An apparatus and method for enhancing system usability, and a mobile device thereof enhance system usability by actively responding to performance degradation of a system and to a negative emotion of a user. The apparatus for enhancing system usability includes a user emotion determiner configured to monitor an emotional state of a user, a system performance measurer configured to monitor performance of a system by collecting at least one system performance indicator, a tolerance time calculator configured to calculate a tolerance time of the user based on the emotional state of the user and the system performance, and a system usability enhancer configured to perform at least one action to enhance usability of the system before end of the tolerance time.

FIG. 1

**Description**

**1. Field**

The following description relates to an apparatus and method for enhancing system usability by actively responding to system performance degradation and negative emotions of a user.

**2. Description of Related Art**

Mobile devices, such as a smartphone and a tablet PC, may provide a user with various applications and functions based on strong hardware performance. As a user installs more applications on a mobile device and operates more applications simultaneously, the performance of a mobile device slows down, or becomes erroneous, resulting in the reduced usability of mobile devices.

A user gives negative feedback on reduced usability of mobile devices, by stopping use of a service, or expressing negative emotions. Accordingly, a solution is needed to enhance system usability by actively responding to system performance degradation and to a user's feedback.

**SUMMARY**

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided an apparatus for enhancing system usability, including a user emotion determiner configured to monitor an emotional state of a user, a system performance measurer configured to monitor performance of a system by collecting at least one system performance indicator, a tolerance time calculator configured to calculate a tolerance time of the user based on the emotional state of the user and the system performance, and a system usability enhancer configured to perform at least one action to enhance usability of the system before end of the tolerance time.

The user emotion determiner may include a sensor data analyzer configured to analyze the emotional state by analyzing data gathered from a sensor.

The user emotion determiner may be further configured to monitor the emotional state of the user based on analyzing at least one bio signal gathered by a sensor.

The bio signal may include at least one of image, sound, movement, facial expression, galvanic skin response (GSR), blood pressure, body temperature, heartbeat, or skin conductance.

The user emotion determiner may include a user emotion feature database (DB) that matches features of physical response to emotional states of the user, the sensor data analyzer may be further configured to analyze the emotional state by reference to the user emotion feature DB.

The user emotion determiner may include an emotional stage determiner configured to determine an emotional stage of the user based on the emotional state.

The emotional stage of the user may be one of two or more predefined emotional stages.

The user emotion determiner may include an emotion changing time detector configured to record a time when the change of the emotional stage occurred, in response to the emotional stage being changed to an emotional stage corresponding to a negative emotion.

The system performance measurer may include a performance indicator collector configured to collect the at least one system performance indicator.

The system performance measurer may further include a system performance feature DB configured to store system performance features representing a degree of performance for each of the at least one system performance indicator.

The system performance feature DB may include two or more items for determining system performance.

The system performance measurer may include a performance degradation determiner configured to determine performance degradation of the system by measuring performance of the system corresponding to each of the two or more items for determining the system performance.

The apparatus may include a performance degradation time detector configured to record a time when the performance degradation of the system occurred.

The system usability enhancer may include an optimization policy DB that defines types and descriptions of at least one action to enhance usability of the system, the system usability enhancer may be further configured to select at least one action from the optimization policy DB based on an action corresponding to the emotional state, the system performance, and the tolerance time to enhance usability of the system.

The user emotion feature DB may be provided in an external server and may be connected to the apparatus through a communication network.

The system performance feature DB may be provided in an external server and may be connected to the apparatus through a communication network.

The optimization policy DB may be provided in an external server and may be connected to the apparatus through a communication network.

In another general aspect, there is provided a method for enhancing system usability, including calculating a tolerance time of a user based on an emotional stage of the user that is identified based on at least one bio signal collected from the user and at least one performance indicator of a system, and performing an action corresponding to the emotional stage and the performance indicator to enhance usability of the system before the tolerance time ends, in response to a degradation of performance of the system.

The calculating of the tolerance time of the user may include determining the emotional stage corresponding to the bio signal by reference to a user emotion feature DB that matches features of physical response to emotional states of the user.

The calculating of the tolerance time of the user may include determining performance degradation of the system by reference to a system performance feature DB that stores features of performance of the system according to at least one performance indicator.

In another general aspect, there is provided a mobile device, including a user emotion determiner configured to monitor an emotional state of a user by analyzing at least one bio signal corresponding to the user's emotion, a system performance measurer configured to monitor performance of a system by collecting at least one system performance indicator, a tolerance time calculator configured to calculate a tolerance time of the user based on the emotional state of the user and the system performance, and a system usability enhancer configured to perform at least one action to enhance usability of the system before the tolerance time ends.

In another general aspect, there is provided a method of enhancing system usability, including measuring performance of the system, determining the emotional state of a user based on the user's bio signals, calculating a tolerance time of the user based on the emotional state and the system performance, selecting at least one action, from an optimization policy database, to enhance usability of the system, and performing the at least one action within the tolerance time.

The selecting of the at least one action may include selecting the at least one action based on the emotional state of the user and the tolerance time of the user.

The at least one action may include a plurality of actions, and the selecting of the at least one action may include selecting greater number of actions, in response to the tolerance time getting shorter or the emotional state getting higher.

Other features and aspects may be apparent from the following detailed description, the drawings, and the claims.

## BRIEF DESCRIPTION OF THE DRAWINGS

FIG. 1 is a diagram illustrating an example of a correlation between a system performance and a user's emotional feedback.

FIG. 2 is a diagram illustrating an example of an apparatus for enhancing system usability.

FIG. 3 is a diagram illustrating an example of the user emotion determiner illustrated in FIG. 2.

FIG. 4 is a diagram illustrating examples of types of a user's emotional stage and an emotional state based on a result value obtained by identifying a user's emotional state.

FIG. 5 is a diagram illustrating an example of the system performance measurer illustrated in FIG. 2.

FIG. 6 is a diagram illustrating an example of a system performance feature table.

FIG. 7 is a diagram illustrating an example of the system usability enhancer illustrated in FIG. 2.

FIG. 8A is a diagram illustrating an example of a form of optimization policy table.

FIG. 8B is a diagram illustrating an example according to the form of optimization policy table illustrated in FIG. 8A.

FIG. 9 is a diagram illustrating an example of a method of enhancing system usability.

FIG. 10 is a diagram illustrating another example of an apparatus for enhancing system usability.

Throughout the drawings and the detailed description, unless otherwise described, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the systems, apparatuses, and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

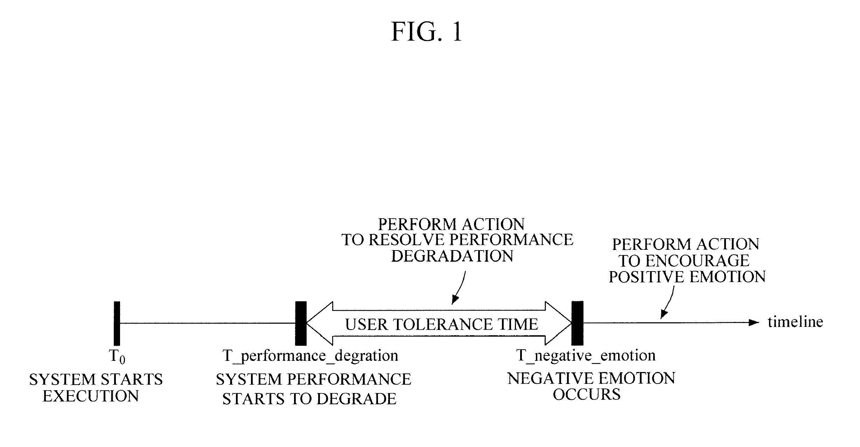

FIG. 1 is a diagram illustrating an example of a correlation between a system performance degradation and a user's emotional feedback.

By monitoring system performance and a user's emotion after a system starts executing, it is possible to identify a time (T_performance_degradation) when system performance starts to degrade and a time (T_negative_emotion) when a user's negative emotion starts to be expressed.

If a system actively performs an action to resolve performance degradation before the time (T_negative_emotion) when a user's negative emotion starts to be expressed, negative emotion of a user may be prevented from occurring, thereby enhancing system usability or user experience. Further, even after a user's negative emotion occurs, an additional action may be taken actively by a system to induce a positive emotion to mitigate a user's negative emotion that occurred.

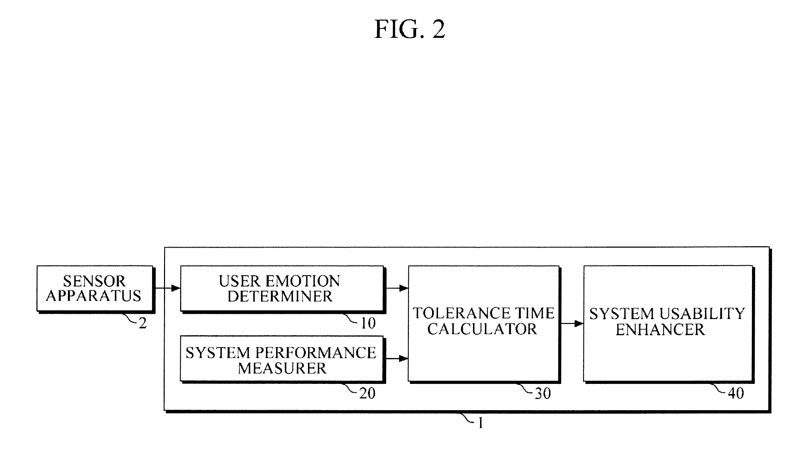

FIG. 2 is a diagram illustrating an example of an apparatus for enhancing system usability. As illustrated in FIG. 2, an apparatus 1 for enhancing system usability includes a user emotion determiner 10, a system performance measurer 20, a tolerance time calculator 30, and a system usability enhancer 40.

The user emotion determiner 10 monitors a current emotional state of a user by analyzing bio signals corresponding to the user's emotion. The bio signals corresponding to the user's emotion are input to the apparatus 1 for enhancing system usability from an external sensor apparatus 2. In other examples, the sensor apparatus 2 may be included in the apparatus 1 for enhancing system usability.

The sensor apparatus 2 collects sensor data, which includes various bio signals such as, for example, image, facial expression, sound, movement, galvanic skin response (GSR), heart rate, body temperature, pulse, blood pressure, and skin conductance to identify emotions of a user. The sensor apparatus 2 also collects information on a surrounding environment. The sensor apparatus 2 provides the data to the apparatus 1 for enhancing system usability. Sensors included in the sensor apparatus 2 may be sensors, such as, for example, camera, microphone, GSR sensor, accelerometer, temperature sensor, pressure sensor, light sensor, and humidity sensor.

For example, the apparatus 1 for enhancing system usability may be mounted on a mobile terminal, and the sensor apparatus 2 may be a camera, a microphone, an accelerometer, a pressure sensor, a light sensor, a humidity sensor, and a temperature sensor, which are included in the mobile terminal.

The system performance measurer 20 collects various indicators that show system performance, and monitors system performance degradation. The performance indicators that show system performance are collected from various software (S/W) and/or hardware (H/W) sensors in a system.

The tolerance time calculator 30 calculates a tolerance time that a user is able to tolerate system performance degradation based on a current emotional state of a user and current performance of a system, which are monitored in the user emotion determiner 10 and the system performance measurer 20, respectively.

When a user's negative emotion occurs, the tolerance time calculator 30 may be notified from the system performance measurer 20 about the detection of the negative emotion. Further, when system performance degradation occurs, the tolerance time calculator 30 may be notified from the system performance measurer 20 about when the system performance degradation started.

The tolerance time calculator 30 provides the system usability enhancer 40 with a current emotional state of a user, current performance of a system, and calculation results of tolerance time.

The system usability enhancer 40 selects and performs various actions to enhance system usability based on a current emotional state of a user, current performance of a system, and calculation results of tolerance time provided by the tolerance time calculator 30. By using an optimization policy database (not shown), the system usability enhancer 40 may select a system usability enhancing action, which is suitable for the user's current emotional state, current performance of the system, and calculation results of the tolerance time.

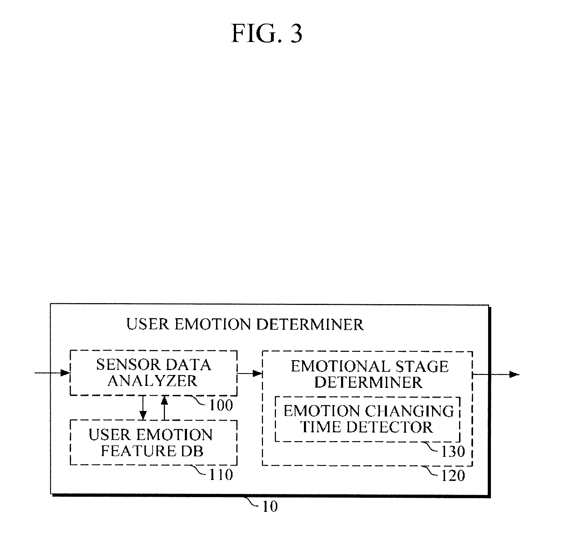

FIG. 3 is a diagram illustrating an example of the user emotion determiner illustrated in FIG. 2. As illustrated in FIG. 3, the user emotion determiner 10 may further include a sensor data analyzer 100, a user emotion feature database (DB) 110 and an emotional stage determiner 120. Further, the emotional stage determiner 120 may include an emotion changing time detector 130.

The sensor data analyzer 100 identifies a current emotional state of a user by analyzing sensor data gathered from a sensor apparatus 2 (not shown). The sensor data analyzer 100 may analyze a user's physical response to her/his emotional states by using various emotion recognition technologies. For example, when the sensor data analyzer 100 uses a technology for identifying emotions from a user's facial expressions, the sensor data analyzer 100 may receive, from a sensor apparatus, image data including the user's facial expressions (in this case, sensors in a sensor apparatus would include a camera for capturing images). As another example, when the sensor data analyzer 100 uses a technology for identifying emotions from a user's voice, the sensor data analyzer 100 may receive, from a sensor apparatus, sound data including the user's voice (in this case, sensors in a sensor apparatus would include a microphone for recording voices).

As another example, the sensor data analyzer 100 may use a technology for identifying emotions from a user's bio signals, such as, for example galvanic skin response (GSR), blood pressure, body temperature, heartbeat. In this case, the sensor data analyzer 100 may receive the user's physical responses to sensors for measuring various bio signals, such as, for example, a GSR sensor, a blood pressure sensor, a body temperature sensor.

The user emotion feature database (DB) 110 is a database (DB) that matches features of physical response to emotional states of a user. The user emotion feature DB 110 may include a user emotion feature table. For example, when using a technology for identifying emotions from a user's facial expressions, the user emotion feature table may store feature representing various movements of facial muscles that correspond to an emotional state. The feature may represent, for example, the contour of a face, eyebrows, the tail of an eye, lips, and the like, and the user emotion feature table may store variations in pixel values corresponding to each feature.

The sensor data analyzer 100 provides the emotional stage determiner 120 with a result value obtained by identifying a current emotional state of a user based on the user emotion feature DB 110.

The emotional stage determiner 120 determines the stage for a result value obtained by identifying a current emotional state of a user.

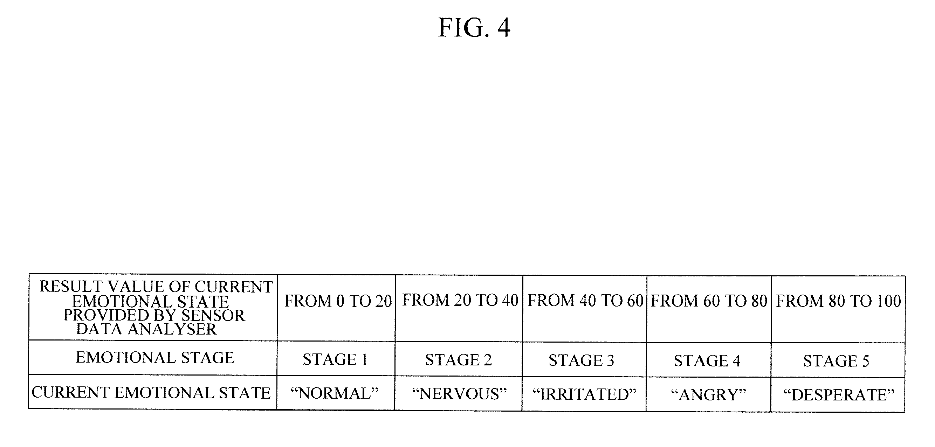

FIG. 4 is a diagram illustrating examples of a correlation between a result value provided by the sensor data analyzer, which is obtained by identifying a user's emotional state, a user's emotional stage, and a current emotional state of the user.

For example, when a result value obtained by identifying a current emotional state provided by the sensor data analyzer 100 is "30," and an emotional stage is classified into stage 2 as illustrated in FIG. 4, a user's current emotional state may be considered "nervous."

In response to the change in an emotional state of a user, the emotion changing time detector 130 detects a time when the emotional state changes.

For example, when an emotional state of a user is maintained in a "normal" state, and then it is recognized that the state has changed to a "nervous" state after a certain time, the emotion changing time detector 130 may record a time when a user's negative emotion occurs, and provide the recorded time to the tolerance time calculator 30.

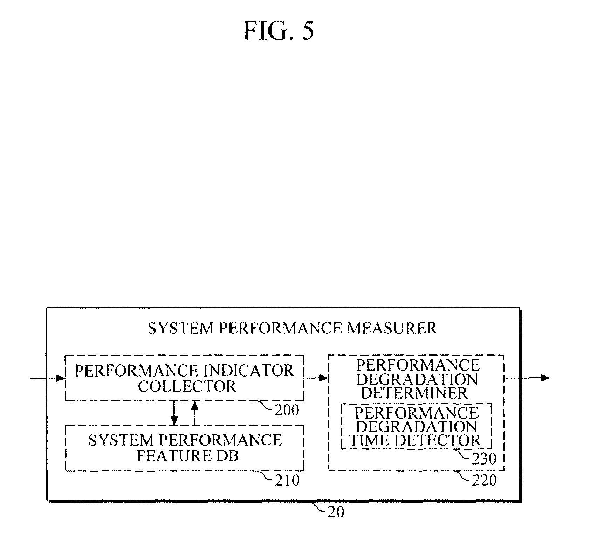

FIG. 5 is a diagram illustrating an example of the system performance measurer illustrated in FIG. 2.

As illustrated in FIG. 5, the system performance measurer 20 may include a performance indicator collector 200, a system performance feature database (DB) 210, a performance degradation determiner 220, and a performance degradation time detector 230.

The performance indicator collector 200 collects various performance indicators (i.e. performance data) that show system performance. The system performance indicators may include various types of criteria for evaluating system performance, such as, for example:

- Time required to load an application
- Time required to execute a function of an application
- Waiting time or "freezing time" for a function of an application
- Frame per second (FPS)
- Memory
- CPU

The system performance feature DB 210 is a database of features representing a degree of performance for each system performance indicator. The performance degradation determiner 220 may evaluate current performance of a system based on the system performance feature DB 210. The system performance feature DB 210 may include a system performance feature table.

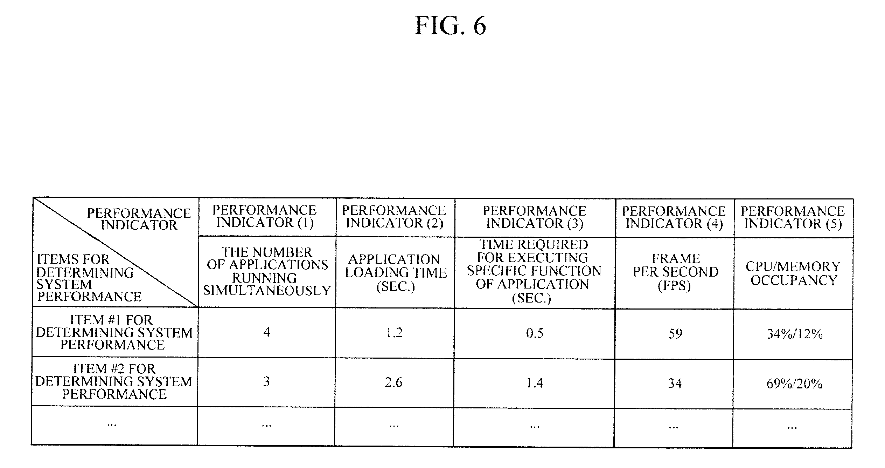

FIG. 6 is a diagram illustrating an example of a system performance feature table.

The system performance feature table illustrated in FIG. 6 includes five performance indicators as follows:

- Number of applications that are running simultaneously

∘ Average loading time of applications (sec.)
∘ Time required for executing a specific function of a specific application (sec.)
∘ Frame per second (FPS) for a specific application
∘ Average occupancy of CPU and memory

"Items for determining system performance" refer to a collection of performance indicators included in the system performance feature table.

Referring to FIG. 6, item #1 for determining system performance is a collection of performance indicators, in which four applications are running simultaneously, an average loading time of the applications is 1.2 sec., FPS is 59, and the CPU occupancy is 34% and memory occupancy is 12%.

Further, item #2 for determining system performance is a collection of performance indicators, in which three applications are running simultaneously, an average loading time of the applications is 2.6 sec., FPS is 34, and the CPU occupancy is 69% and memory occupancy is 20%.

The performance degradation determiner 220 determines current performance of a system compared to performance indicators included in each item for determining system performance.

For example, with respect to item #1 for determining system performance in FIG. 6, it may be determined that current system performance is "normal." With respect to item #2 for determining system performance, it may be determined that current system performance is "abnormal," indicating that system performance degradation has occurred.

In response to an occurrence of performance degradation of a system, performance degradation time detector 230 detects a time when the performance degradation occurs.

For example, when performance degradation determiner 220 identifies that current performance of a system as being in a "normal" state, which changes to an "abnormal" state after a certain time, the performance degradation time detector 230 records a time that the performance degradation occurred. The performance degradation determiner 220 provides the recorded time to the tolerance time calculator 30.

The tolerance time calculator 30 receives a time when a negative emotion of a user occurs, and a time when performance degradation of a system occurs, from the emotion changing time detector 130 and the performance degradation time detector 230, respectively. The tolerance time calculator 30 calculates a tolerance time, which is a maximum period of time for which a user is able to tolerate performance degradation of a system. The tolerance time calculated by the tolerance time calculator 30 is provided to the system usability enhancer 40.

Based on the time ($T_{negative\_emotion}$) when a user's negative emotion occurs, and the time ($T_{performace\_degration}$) when system performance degradation occurs, a tolerance time of a user ($TT_{tolerance}$) may be determined by the following equation 1.

【Equation 1】

$$TT_{tolerance} = T_{negative\_emotion} - T_{performace\_degration}$$

For example, if the time ($T_{performace\_degration}$) when performance degradation of a system occurs is 17: 02: 20, and the time ($T_{negative\_emotion}$) when a negative emotion of a user occurs is 17: 07: 15, the user's tolerance time ($TT_{tolerance}$) is determined to be 4 min. 55 sec.

A tolerance time ($TT_{tolerance}$) of a user may also be obtained as an average value based on several calculations, as illustrated in Equation 2.

【Equation 2】

$$TT_{tolerance} = average\ (T_{negative\_emotion} - T_{performace\_degration})$$

As a tolerance time of a user is a maximum period of time for which the user is able to tolerate performance degradation of a system, there is a possibility that a user may be frustrated using a system, such as, for example, a mobile terminal, after the user's tolerance time ends.

Accordingly, a system is required to perform an action to enhance system usability before a tolerance time of a user ends, so that the user may continue to use a system with a positive emotion.

The tolerance time calculator 30 provides the system usability enhancer 40 with a current emotional state of a user, current performance of a system, and calculation results of tolerance time.

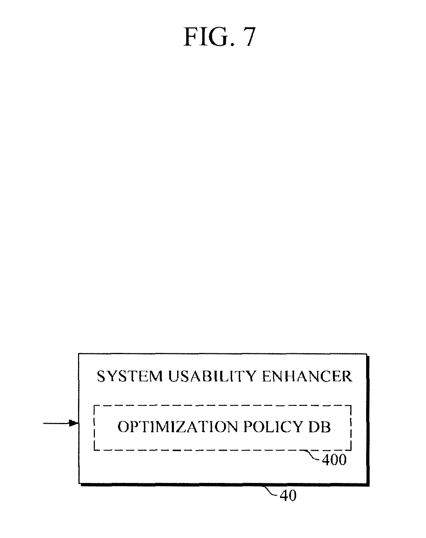

FIG. 7 is a diagram illustrating an example of the system usability enhancer illustrated in FIG. 2. Based on a current emotional state of a user, current performance of a system, and calculation results of tolerance time provided by the tolerance time calculator 30, the system usability enhancer 40 performs various actions to enhance system usability. By using an optimization policy database (DB) 400, the system usability enhancer 40 may select a system usability enhancing action, which is suitable for the user's current emotional state, current performance of the system, and calculation results of the tolerance time.

Examples of the actions for enhancing system usability are as follows:

(1) Enhancing system usability by performing optimization to improve system performance such as, for example, delete a cache or cookie file for a web browsing; memory optimization; and terminate applications running in the background.

(2) Enhancing system usability by performing alternative actions, such as, for example, When connection to a Wi-Fi network is unstable, a communication mode is automatically converted to connect to a cellular data communication network (3G, 4G, etc.), thereby enabling data communications.

(3) Enhancing system usability by providing informational messages, such as, for example, an informing message that explains a current state of a system (e.g. displaying a message "memory is being optimized to improve system processing speed") may be provided for a user having a negative emotion. In another example, an informing message that encourages a user to have a positive emotion (e.g. jokes, maxims, comic strips, etc.) may be provided for a user having a negative emotion.

Types and contents of actions for enhancing system usability may be varied depending on a current emotional state of a user (emotional stage) and a tolerance time of a user, as illustrated in FIG. 4.

Accordingly, the system usability enhancer 40 may select actions to enhance system usability based on the optimization policy DB 400. The optimization policy DB 400 includes an optimization policy table, which is a collection of data defining types and descriptions of actions to enhance system usability according to a current emotional state (emotional stage) and a tolerance time of a user.

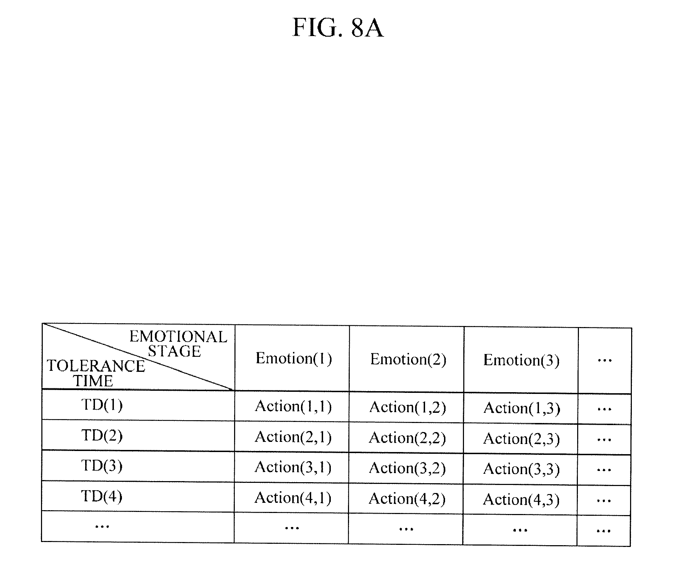

FIG. 8A is a diagram illustrating an example of a form of optimization policy table.

As illustrated in FIG. 8A, the optimization policy table defines optimization actions to be actively performed by a system (Action (1,1), Action (1,2), Action (1,3), ...) corresponding to a predetermined number of emotional stages (Emotion (1), Emotion (2), Emotion (3), ...) and a predetermined tolerance time (TT (1), TT (2), TT (3), ...) of a user.

The optimization actions may be a set of several operations, rather than a single operation. For example, "Action (4, 3) may be an optimization action of performing three operations including memory optimization, termination of two background applications, and deletion of all temporary files.

The optimization policy table may be defined according to the following policy:

 ∘ As a tolerance time of a user gets shorter, more actions are performed.
 ∘ As a current emotional state of a user gets more negative (that is, a current emotional stage is higher), stronger and more active actions are performed.

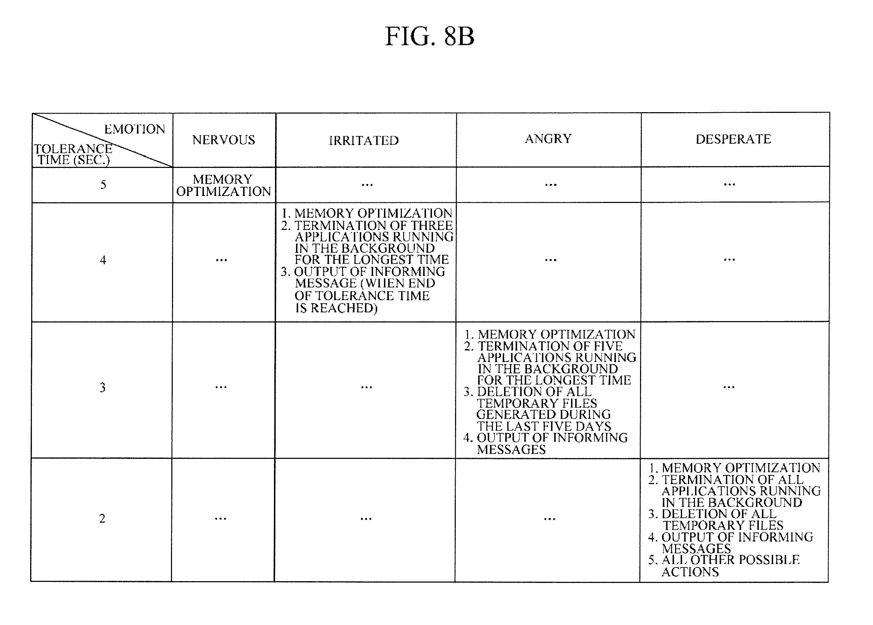

FIG. 8B is a diagram illustrating an example according to the form of optimization policy table illustrated in FIG. 8A.

In FIG. 8B, emotional stages of a user are classified into four stages. That is, Emotion (1), Emotion (2), Emotion (3) and Emotion (4) in FIG. 8A correspond to "nervous," "irritated," "angry," and "desperate" in FIG. 8B.

Further, a tolerance time of a user is classified into four periods of time, i.e., TT (1) is 5 seconds, TT (2) is 4 seconds, TT (3) is 3 seconds, and TT (4) is 2 seconds.

For example, under the condition of TD (1) defined as 5 seconds, it is expected that a user will no longer use the system due to the negative emotion in 5 seconds after a user's negative emotion is identified. Accordingly, the condition of TD (1) defined as 5 seconds indicates that a system is given 5 seconds or less to perform active actions to enhance usability, so that a user continues to use the system with a positive emotion.

Further, in a case where an emotional stage of a user is a "nervous" stage, under the condition of TD (1) defined as 5 seconds, Action (1, 1) for enhancing system usability includes "memory optimization." Accordingly, a system performs "memory optimization (Action (1, 1)) within 5 seconds. When system usability is enhanced through this operation, a user's negative emotion may be mitigated, so that a user probably continues to use the system with a positive emotion.

As another example, where an emotional stage of a user is an "irritated" stage, under the condition of TD (2) defined as 4 seconds, Action (2, 2) for enhancing system usability includes three operations, "memory optimization, termination of three applications running in the background for the longest time, and display of informing messages to a user when the end of a tolerance time is reached". Accordingly, a system performs the three operations within 4 seconds. When system usability is enhanced through the operations, a user's negative emotion may be mitigated, so that a user probably continues to use the system with a positive emotion.

As another example, where a user's emotional stage is an "angry" stage, under the condition of TD (3) defined as 3 seconds, Action (3, 3) for enhancing system usability includes four operations, "memory optimization, termination of four applications running in the background for the longest time, deletion of all temporary files generated during the last five days, and display of informing messages to a user when the end of a tolerance time is reached". Accordingly, a system performs the four operations within 3 seconds.

As another example, where a user's emotional stage is a "desperate" stage, under the condition of TD (4) defined as 2 seconds, Action (4, 4) for enhancing system usability includes five operations of performing "memory optimization, termination of all applications running in the background, deletion of all temporary files of a system, display of informing messages to a user when the end of a tolerance time is reached, and all other possible actions". Accordingly, a system performs the five operations within 2 seconds.

As can be seen from Action (1,1), Action (2, 2), Action (3, 3) and Action (4,4), as a tolerance time of a user gets shorter, and an emotional stage of a user gets higher, the user is less patient, and thus, the number of operations included in corresponding actions for enhancing system usability is increased. For example, the number of operations performed by Action (1, 1) is one, while the number of operations by Action (3, 3) is four. Further, contents of operations become more active. For example, a second operation of Action (2, 2) is termination of only three applications running in the background, while a second operation of Action (4, 4) is termination of "all" applications running in the background.

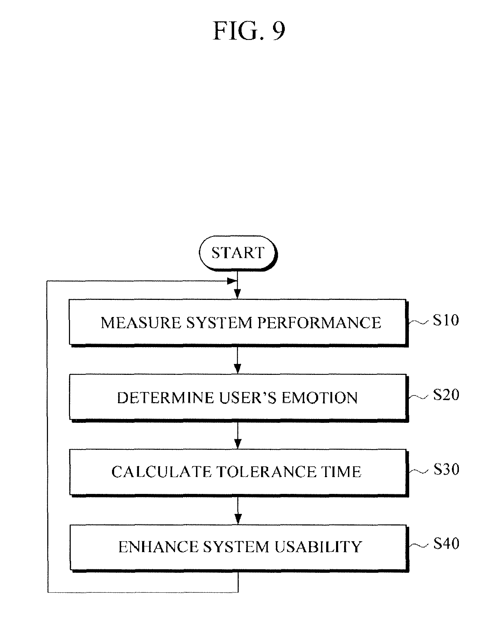

FIG. 9 is a diagram illustrating an example of enhancing system usability. The operations in FIG. 9 may be performed in the sequence and manner as shown, although the order of some operations may be changed or some of the operations omitted without departing from the spirit and scope of the illustrative examples described. Many of the operations shown in FIG. 9 may be performed in parallel or concurrently. The above descriptions of FIGS. 1-8B, are also applicable to FIG. 9, and are incorporated herein by reference. Thus, the above description may not be repeated here.

The method for enhancing system usability illustrated in FIG. 9 includes measuring system performance in S10, determining emotions of a user in S20, calculating a user tolerance time in S30, and enhancing system usability in S40.

In S10, performance monitoring is started when one or more applications are launched in a system. In response to performance degradation of the system, a specific time when performance degradation of the system occurred, and performance indicators at that time are recorded. In an example, the time when performance degradation of the system is identified may be determined as the recorded time when performance degradation of the system occurred. Even when no system performance degradation occurs, system performance is continuously monitored until performance degradation occurs.

In S20, a current emotional state of a user is identified based on various sensor data collected from the sensors.

An emotional state of a user may be identified by using various existing emotion recognizing technologies. For example, when using a technology for identifying emotions from a user's facial expressions, image data including the user's facial expressions received from a sensor are analyzed to identify a current emotional state of the user.

In another example, when using a technology for identifying emotions from a user's voice, sound data including the user's voice that is received from a sensor is analyzed to identify a current emotional state of the user.

In another example, when using a technology for identifying emotions from a user's bio signals (e.g. GSR, blood pressure, body temperature, heart rate, etc.), data representing the user's physical responses received from a sensor is analyzed to identify a current emotional state of the user.

After identifying a current emotional state of a user, in response to a user experiencing a negative emotion, a specific time when a negative emotion occurred and an emotional stage at that time are recorded. The time when the occurrence of negative emotions is identified may be determined as a time when a negative emotional state occurred to a user.

In S30, a tolerance time of the user is calculated based on a time when system performance degradation occurs and a time when a user exhibits negative emotion.

The tolerance time of a user may be a time duration corresponding to a difference between the time when performance degradation of a system occurs and the time when a negative emotion occurs to a user. In another example, the tolerance time of a user may be an average value obtained by making several calculations of differences between the time when system performance degradation occurs and the time when a negative emotion occurs to a user.

In S40, in response to a performance degradation of a system, various actions are selected to enhance system usability.

In this case, actions to enhance system performance may be selected based on a current emotional state of a user, current performance of a system, and tolerance time provided from the tolerance time calculator. An optimization policy database may be used to select a system usability enhancing action, which is suitable for the current emotional state of the user, current performance of the system, and calculation results of the tolerance time.

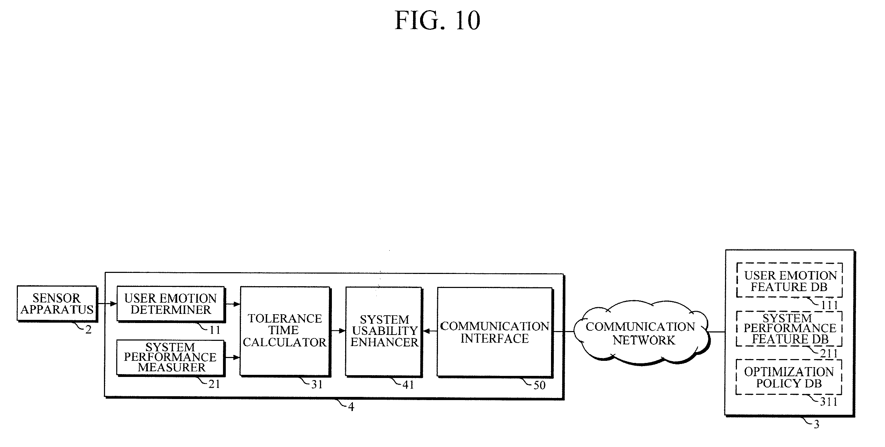

FIG. 10 is a diagram illustrating another example of an apparatus for enhancing system usability.

Unlike the apparatus 2 for enhancing system usability illustrated in FIG. 2, a user emotion feature database (DB) 111, a system performance feature database (DB) 211, and an optimization policy database (DB) 311 may be located in an external remote server 3 for an apparatus 4 for enhancing system usability illustrated in FIG. 10. The apparatus 4 for enhancing system usability is connected to the remote server 3 through a communication network, and further includes a communication interface 50 for the connection.

A user emotion determiner 11, a system performance measurer 21, and a system usability enhancer 41 perform the same functions as the user emotion determiner 10, the system performance measurer 20, and the system usability enhancer 40 illustrated in FIG. 2. However, the user emotion determiner 11, the system performance measurer 21, and the system usability enhancer 41 are connected to the remote server 3 to refer to the user emotion feature DB 111, the system performance feature DB 211, and the optimization policy DB 311, respectively.

According to the example shown in FIG. 10, including the user emotion feature DB 111, the system performance feature DB 211, and the optimization policy DB 311 in the remote server 3 may have the following advantages:

- ◦ A configuration of the apparatus 4 for enhancing system usability may be relatively simplified.
- ◦ As various apparatuses 4 for enhancing system usability share the same user emotion feature DB 111, the same system performance feature DB 211, and the same optimization policy DB 311, consistent actions for enhancing system usability may be determined.
- ◦ Along with the improvement of performance of the user emotion feature DB 111, the system performance feature DB 211, and the optimization policy DB 311, performance of all apparatuses 4 for enhancing system usability connected to the remote server 3 may also be improved.

All of the user emotion feature DB 111, the system performance feature DB 211, and the optimization policy DB 311 are all located in the remote server 3 in FIG. 10. However, in other examples, one or more of the user emotion feature DB 111, the system performance feature DB 211, and the optimization policy DB 311 may be located in the remote server 3.

The processes, functions, and methods described above can be written as a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, Wi-Fi, etc.). In addition, functional programs, codes, and code segments for accomplishing the example disclosed herein can be construed by programmers skilled in the art based on the flow diagrams and block diagrams of the figures and their corresponding descriptions as provided herein.

The apparatuses and units described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a hardware component may include multiple processors or a processor and a controller. In addition, different processing configurations are possible, such a parallel processors.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims.

**Claims**

1. An apparatus for enhancing system usability, comprising:

   a user emotion determiner configured to monitor an emotional state of a user;
   a system performance measurer configured to monitor performance of a system by collecting at least one system performance indicator;
   a tolerance time calculator configured to calculate a tolerance time of the user based on the emotional state of the user and the system performance; and
   a system usability enhancer configured to perform at least one action to enhance usability of the system before end of the tolerance time.

2. The apparatus of claim 1, wherein the user emotion determiner comprises a sensor data analyzer configured to analyze the emotional state by analyzing data gathered from a sensor, and/or
   wherein the user emotion determiner is further configured to monitor the emotional state of the user based on analyzing at least one bio signal gathered by a sensor.

3. The apparatus of claim 2, wherein the bio signal comprises at least one of image, sound, movement, facial expression, galvanic skin response, GSR, blood pressure, body temperature, heartbeat, or skin conductance.

4. The apparatus of claim 2, wherein:

   the user emotion determiner further comprises a user emotion feature database, DB, that matches features of physical response to emotional states of the user,
   the sensor data analyzer is further configured to analyze the emotional state by reference to the user emotion feature DB, and/or
   wherein the user emotion determiner further comprises an emotional stage determiner configured to determine an emotional stage of the user based on the emotional state.

5. The apparatus of claim 4, wherein the emotional stage of the user is one of two or more predefined emotional stages.

6. The apparatus of claim 5, wherein the user emotion determiner further comprises an emotion changing time detector configured to record a time when the change of the emotional stage occurred, in response to the emotional stage being changed to an emotional stage corresponding to a negative emotion.

7. The apparatus of one of claims 1 to 6, wherein the system performance measurer comprises a performance indicator collector configured to collect the at least one system performance indicator, and/or
   a system performance feature DB configured to store system performance features representing a degree of performance for each of the at least one system performance indicator.

8. The apparatus of claim 7, wherein the system performance feature DB comprises two or more items for determining system performance, or
   wherein the system performance feature DB is provided in an external server and is connected to the apparatus through a communication network.

9. The apparatus of claim 8, wherein the system performance measurer further comprises a performance degradation determiner configured to determine performance degradation of the system by measuring performance of the system corresponding to each of the two or more items for determining the system performance.

10. The apparatus of claim 9, further comprising a performance degradation time detector configured to record a time when the performance degradation of the system occurred.

11. The apparatus of one of claims 1 to 10, wherein:

    the system usability enhancer comprises an optimization policy DB that defines types and descriptions of at least one action for enhancing usability of the system,
    the system usability enhancer is further configured to select at least one action from the optimization policy DB based on an action corresponding to the emotional state, the system performance, and the tolerance time to enhance usability of the system, and/or

wherein the optimization policy DB is provided in an external server and is connected to the apparatus through a communication network.

12. The apparatus of claim 4, wherein the user emotion feature DB is provided in an external server and is connected to the apparatus through a communication network.

13. A method of operating a mobile device, comprising the steps of:

monitoring, by a user emotion determiner, an emotional state of a user by analyzing at least one bio signal corresponding to the user's emotion;

monitoring, by a system performance measurer, performance of a system by collecting at least one system performance indicator;

calculating, by a tolerance time calculator, a tolerance time of the user based on the emotional state of the user and the system performance; and

performing, by a system usability enhancer, at least one action to enhance usability of the system before the tolerance time ends.

14. A computer-readable medium having instructions for enhancing system usability, that, when performed by a processor, cause the processor to perform the steps of:

measuring performance of the system;

determining the emotional state of a user based on the user's bio signals;

calculating a tolerance time of the user based on the emotional state and the system performance;

selecting at least one action, from an optimization policy database, to enhance usability of the system; and

performing the at least one action within the tolerance time.

15. The computer-readable medium of claim 14, wherein the selecting of the at least one action comprises selecting the at least one action based on the emotional state of the user and the tolerance time of the user, and/or wherein:

the at least one action comprises a plurality of actions; and

the selecting of the at least one action comprises selecting greater number of actions, in response to the tolerance time getting shorter or the emotional state getting higher.

# FIG. 1

PERFORM ACTION
TO RESOLVE PERFORMANCE
DEGRADATION

PERFORM ACTION
TO ENCOURAGE
POSITIVE EMOTION

USER TOLERANCE TIME

timeline

$T_0$
SYSTEM STARTS
EXECUTION

T_performance_degration
SYSTEM PERFORMANCE
STARTS TO DEGRADE

T_negative_emotion
NEGATIVE EMOTION
OCCURS

EP 2 840 464 A1

EP 2 840 464 A1

# FIG. 2

SENSOR APPARATUS ~2

USER EMOTION DETERMINER ~10

SYSTEM PERFORMANCE MEASURER ~20

TOLERANCE TIME CALCULATOR ~30

SYSTEM USABILITY ENHANCER ~40

~1

# FIG. 3

```
┌──────────────────────────────────────────────────────────────┐
│                  USER EMOTION DETERMINER                       │
│   ┌─────────────────────┐    ┌─────────────────────────────┐   │
│   │   SENSOR DATA       │    │    EMOTIONAL STAGE          │   │
│   │   ANALYZER          │    │    DETERMINER               │   │
│   │                     │    │  ┌───────────────────────┐  │   │
│   └──────────────────100┘    │  │ EMOTION CHANGING      │  │   │
│   ┌─────────────────────┐    │  │ TIME DETECTOR         │  │   │
│   │   USER EMOTION      │    │  └───────────────────130─┘  │   │
│   │   FEATURE DB        │    │                             │   │
│   └──────────────────110┘    └──────────────────────────120┘   │
│                          10                                    │
└──────────────────────────────────────────────────────────────┘
```

FIG. 4

| RESULT VALUE OF CURRENT EMOTIONAL STATE PROVIDED BY SENSOR DATA ANALYSER | FROM 0 TO 20 | FROM 20 TO 40 | FROM 40 TO 60 | FROM 60 TO 80 | FROM 80 TO 100 |
|---|---|---|---|---|---|
| EMOTIONAL STAGE | STAGE 1 | STAGE 2 | STAGE 3 | STAGE 4 | STAGE 5 |
| CURRENT EMOTIONAL STATE | "NORMAL" | "NERVOUS" | "IRRITATED" | "ANGRY" | "DESPERATE" |

# FIG. 5

SYSTEM PERFORMANCE MEASURER

PERFORMANCE INDICATOR
COLLECTOR
200

SYSTEM PERFORMANCE
FEATURE DB
210

PERFORMANCE
DEGRADATION
DETERMINER

PERFORMANCE
DEGRADATION
TIME DETECTOR
230

220

20

# FIG. 6

| PERFORMANCE INDICATOR / ITEMS FOR DETERMINING SYSTEM PERFORMANCE | PERFORMANCE INDICATOR (1) THE NUMBER OF APPLICATIONS RUNNING SIMULTANEOUSLY | PERFORMANCE INDICATOR (2) APPLICATION LOADING TIME (SEC.) | PERFORMANCE INDICATOR (3) TIME REQUIRED FOR EXECUTING SPECIFIC FUNCTION OF APPLICATION (SEC.) | PERFORMANCE INDICATOR (4) FRAME PER SECOND (FPS) | PERFORMANCE INDICATOR (5) CPU/MEMORY OCCUPANCY |
|---|---|---|---|---|---|
| ITEM #1 FOR DETERMINING SYSTEM PERFORMANCE | 4 | 1.2 | 0.5 | 59 | 34%/12% |
| ITEM #2 FOR DETERMINING SYSTEM PERFORMANCE | 3 | 2.6 | 1.4 | 34 | 69%/20% |
| ... | ... | ... | ... | ... | ... |

EP 2 840 464 A1

# FIG. 7

SYSTEM USABILITY ENHANCER

OPTIMIZATION POLICY DB

400

40

# FIG. 8A

| EMOTIONAL STAGE / TOLERANCE TIME | Emotion(1) | Emotion(2) | Emotion(3) | ... |
|---|---|---|---|---|
| TD(1) | Action(1,1) | Action(1,2) | Action(1,3) | ... |
| TD(2) | Action(2,1) | Action(2,2) | Action(2,3) | ... |
| TD(3) | Action(3,1) | Action(3,2) | Action(3,3) | ... |
| TD(4) | Action(4,1) | Action(4,2) | Action(4,3) | ... |
| ... | ... | ... | ... | ... |

# FIG. 8B

| EMOTION / TOLERANCE TIME (SEC.) | NERVOUS | IRRITATED | ANGRY | DESPERATE |
|---|---|---|---|---|
| 5 | MEMORY OPTIMIZATION | ... | ... | ... |
| 4 | ... | 1. MEMORY OPTIMIZATION<br>2. TERMINATION OF THREE APPLICATIONS RUNNING IN THE BACKGROUND FOR THE LONGEST TIME<br>3. OUTPUT OF INFORMING MESSAGE (WHEN END OF TOLERANCE TIME IS REACHED) | ... | ... |
| 3 | ... | ... | 1. MEMORY OPTIMIZATION<br>2. TERMINATION OF FIVE APPLICATIONS RUNNING IN THE BACKGROUND FOR THE LONGEST TIME<br>3. DELETION OF ALL TEMPORARY FILES GENERATED DURING THE LAST FIVE DAYS<br>4. OUTPUT OF INFORMING MESSAGES | ... |
| 2 | ... | ... | ... | 1. MEMORY OPTIMIZATION<br>2. TERMINATION OF ALL APPLICATIONS RUNNING IN THE BACKGROUND<br>3. DELETION OF ALL TEMPORARY FILES<br>4. OUTPUT OF INFORMING MESSAGES<br>5. ALL OTHER POSSIBLE ACTIONS |

EP 2 840 464 A1

FIG. 9

```
        ( START )
            │
            ▼
┌──────────────────────────────┐
│  MEASURE SYSTEM PERFORMANCE  │ ～ S10
└──────────────────────────────┘
            │
            ▼
┌──────────────────────────────┐
│   DETERMINE USER'S EMOTION   │ ～ S20
└──────────────────────────────┘
            │
            ▼
┌──────────────────────────────┐
│   CALCULATE TOLERANCE TIME   │ ～ S30
└──────────────────────────────┘
            │
            ▼
┌──────────────────────────────┐
│   ENHANCE SYSTEM USABILITY   │ ～ S40
└──────────────────────────────┘
```

# FIG. 10

EP 2 840 464 A1

Europäisches
Patentamt

European
Patent Office

Office européen
des brevets

## EUROPEAN SEARCH REPORT

Application Number

EP 14 17 8341

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/082516 A1 (BASU SUMIT [US] ET AL) 1 April 2010 (2010-04-01) * the whole document * | 1-15 | INV. G06F3/01 G06F11/34 |
| A | US 2013/082916 A1 (DIXIT AMITABH [US]) 4 April 2013 (2013-04-04) * abstract * * paragraph [0042] - paragraph [0081] * | 1-15 | |
| A | US 2006/190822 A1 (BASSON SARA H [US] ET AL) 24 August 2006 (2006-08-24) * abstract * * claims 1-7 * | 1-15 | |

TECHNICAL FIELDS
SEARCHED    (IPC)

G06F

The present search report has been drawn up for all claims

| Place of search | Date of completion of the search | Examiner |
|---|---|---|
| Munich | 15 December 2014 | Salsa, Francesco |

EPO FORM 1503 03.82 (P04C01)

## ANNEX TO THE EUROPEAN SEARCH REPORT
## ON EUROPEAN PATENT APPLICATION NO.

EP 14 17 8341

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2014

| Patent document cited in search report | | Publication date | Patent family member(s) | | Publication date |
|---|---|---|---|---|---|
| US 2010082516 | A1 | 01-04-2010 | NONE | | |
| US 2013082916 | A1 | 04-04-2013 | EP<br>US<br>WO | 2761401 A2<br>2013082916 A1<br>2013046125 A2 | 06-08-2014<br>04-04-2013<br>04-04-2013 |
| US 2006190822 | A1 | 24-08-2006 | NONE | | |

EPO FORM P0459